# EUROPÄISCHE PATENTSCHRIFT

(11) **EP 3 632 802 B1**
(45) Veröffentlichungstag und Bekanntmachung des Hinweises auf die Patenterteilung: **18.08.2021**
(21) Anmeldenummer: 19201449.6
(22) Anmeldetag: 04.10.2019
(51) Int. Cl.: B64F 1/32, B60P 1/00

(54) **GEPÄCKFÖRDERER SOWIE VERFAHREN ZU SEINEM BETRIEB**
BAGGAGE CONVEYOR AND METHOD FOR ITS OPERATION
TRANSPORTEUR DE BAGAGES AINSI QUE SON PROCÉDÉ DE FONCTIONNEMENT

(30) Priorität: 05.10.2018 DE 102018124587
(43) Veröffentlichungstag der Anmeldung: 08.04.2020
(73) Patentinhaber: MULAG FAHRZEUGWERK Heinz Wössner GmbH & CO. KG, 77728 Oppenau (DE)
(72) Erfinder: WÖSSNER, Holger, 77704 Oberkirch (DE); HÜGER, Thomas, 77704 Oberkirch (DE)
(74) Vertreter: Weickmann & Weickmann PartmbB

(56) Entgegenhaltungen:
- EP-A1- 3 450 324
- WO-A2-03/097404
- CN-U- 203 186 409
- CN-Y- 201 228 082
- US-A1- 2003 070 900
- US-A1- 2006 055 520

## Beschreibung

Die Erfindung betrifft einen Gepäckförderer, insbesondere einen fahrbaren Gepäckförderer, wie er auf dem Vorfeld von Flughäfen zum Be- und Entladen von Flugzeugen eingesetzt wird.

### II. Technischer Hintergrund

Beim Beladen des Flugzeuges wird in der Regel das Gepäck der Passagiere mit Gepäckwägen zum Flugzeug gefahren und muss dort in die meist in mehreren Metern Höhe gelegene Ladeluke des Flugzeuges hineintransportiert werden.

Zu diesem Zweck wird ein Gepäckförderer, der auf einem fahrbaren, meist selbstfahrenden, Chassis montiert ist, neben das Flugzeug gefahren und das vordere Ende des Hauptförderers dieses Gepäckförderers hochgefahren auf Höhe der Ladeluke und durch Verfahren des Chassis teilweise in die Ladeluke hinein, während das hintere Ende des Hauptförderers auf einem Niveau nahe dem Niveau des Untergrundes oder nur etwa einem Meter darüber, verbleibt.

Dabei müssen auch kleinste Beschädigungen am Flugzeug, also auch an den Seitenkanten der Ladeluke oder Ähnlichem, durch den Hauptförderer unbedingt vermieden werden, weshalb das vordere Ende des Hauptförderers einmal korrekt und möglichst berührungsfrei in der Ladeluke positioniert werden sollte und dann während des Ladevorganges nicht mehr verändert werden sollte.

Dabei ergibt sich das erste Problem, dass aufgrund der Lenkbarkeit der Räder nur einer der beiden Achsen des Chassis der Gepäcksförderer genau im rechten Winkel zu der Seitenfläche des Flugzeuges, in der sich die Ladeluke befindet, also in der Regel genau im rechten Winkel zur Längsrichtung des Flugzeuges, herangefahren werden muss und ein kurz vor dem Erreichen der Ladeluke festgestellter Versatz des vorderen Endes des Hauptförderers gegenüber der Ladeluke nach vorne oder hinten mittels Einschlag der lenkbaren Räder nicht nur die gewünschte Verringerung des Quervorsatzes ergibt, sondern unerwünschter Weise auch eine Veränderung des Winkels zwischen der - in der Aufsicht betrachteten - Längsrichtung des Förderbandwagens, also der Fördererrichtung, zur Flugzeug-Längsachse. Dadurch besteht das Risiko einer Beschädigung der Außenhaut des Flugzeuges.

Dann wird jedes einzelne Gepäckstück manuell den Gepäckwägen entnommen und auf das hintere Ende des Hauptförderers des Gepäckförderers aufgelegt.

Diese Handarbeit fällt umso geringer aus, je genauer das hintere Ende des Förderers, auf die die Gepäckstücke aufgelegt werden müssen, mit dem Entnahmeniveau aus den Gepäckwägen übereinstimmt, und je näher dieses hintere Ende des Förderers an den Gepäckwägen endet.

Da die Gepäckwägen einen Boden besitzen, der wegen der kleinen Räder nur 20 bis 60 cm über dem Untergrund liegt, im vollbeladenen Zustand das oberste Gepäckstück im Gepäckwagen jedoch durchaus fast zwei Meter über dem Boden positioniert sein kann, ist während des Entladens der Gepäckwägen eine Höhenverstellung des hinteren Endes des zu beschickenden Förderers notwendig.

Das zweite Problem besteht nun darin, dass es notwendig sein kann, das hintere Ende des Hauptförderers während des Ladevorganges in seiner Höhenlage zu verändern, selbst wenn sich an das hintere Ende des Hauptförderers ein Zusatzförderer anschließt, dessen hinteres, freies Ende separat in seiner Höhe verstellt werden kann.

Das verändern der Höhe des hinteren Endes des Hauptförderers bedingt jedoch bei fast allen Konstruktionen solcher Förderbandwägen auch eine Veränderung der Position des vorderen Endes des Hauptförderers:
Denn der Hauptförderer ist in aller Regel gegenüber dem Chassis mit einer vorderen und einer hinteren Stütze abgestützt, welche verschwenkbar um jeweils eine Querachse einerseits an der Unterseite des Hauptförderers und andererseits am Chassis befestigt ist.

Die Stütze, vorzugsweise die vordere Stütze, kann längenveränderbar, insbesondere teleskopierbar, sein insbesondere in Form eines Hydraulikzylinders.

Die Stütze, vorzugsweise die hintere Stütze, kann durch eine Hilfsstütze um die untere Querachse der Stütze verschwenkt werden, indem die abseits der unteren Querachse an der Stütze angreifende Hilfsstütze mit ihrem anderen Ende entweder ortsfest am Chassis befestigt und längenveränderbar, insbesondere teleskopierbar, ist oder dieses andere Ende in Längsrichtung des Chassis verfahrbar ist.

Auch durch diese Wechselwirkung kann es zu Beschädigungen des Flugzeuges durch den Förderbandwagen kommen.

Beim Entladen des Flugzeuges wird das vordere Ende des Hauptförderers in der Regel nicht in die Ladeluke hinein gefahren, sondern außerhalb des Flugzeuges unterhalb der Unterkante der Ladeluke positioniert, damit die Gepäckstücke aus der Ladeluke auf das vordere Ende des Hauptförderers fallen können.

Die dargelegten beiden Probleme bestehen dabei jedoch in gleicher Weise.

An dieser Stelle soll klargestellt werden, dass die Verwendung des Begriffes Förderband für einen Förderer, insbesondere den Hauptförderer, des Förderbandwagens im Rahmen der vorliegenden Erfindung keine Beschränkung auf eine Bauform des Förderers nur auf Förderbänder darstellen soll, sondern alle anderen Arten von Förderer mit umfassen soll.

Die Druckschrift EP 3 450 324 A1 der Anmelderin offenbart ein Vorfeld-Fahrzeug gemäß dem Oberbegriff des Anspruchs 1 sowie ein Verfahren zum Steuern der Bewegung eines solchen Vorfeld-Fahrzeugs. Darüber hinaus sei auf die Druckschriften US 2003/070900 A1 und WO 03/097404 A2 hingewiesen.

### III. Darstellung der Erfindung

### a) Technische Aufgabe

Es ist daher die Aufgabe gemäß der Erfindung, durch die konstruktive Ausgestaltung des Förderbandwagens und/oder ein geeignetes Verfahren zu seinem Betrieb das Risiko einer Beschädigung des Flugzeuges durch den Einsatz des Förderbandwagens zu minimieren und nach Möglichkeit völlig auszuschließen.

### b) Lösung der Aufgabe

Diese Aufgabe wird durch die Merkmale der Ansprüche 1 und 13 gelöst. Vorteilhafte Ausführungsformen ergeben sich aus den Unteransprüchen.

Bei einem gattungsgemäßen Förderbandwagen, der zwei Achsen aufweist, von denen mindestens die Räder einer Achse lenkbar sind, und bei dem der in Längsrichtung verlaufende Hauptförderer durch eine vordere und eine hintere Stütze auf dem Chassis befestigt ist, sodass durch Hochschwenken und/oder Längenveränderung mindestens bei einer der Stützen die Höhenlage und Neigung einer Arbeitsstellung des Hauptförderers einstellbar ist, wird die erfindungsgemäße Aufgabe dadurch gelöst, dass
- die unteren Enden der Stützen, die ja um in Querrichtung zur Längsrichtung verlaufende Querachsen verschwenkbar - direkt oder indirekt - am Chassis befestigt sind, in Längsrichtung entlang am Chassis gesteuert verfahrbar sind.

Vorzugsweise sind alle vier Räder lenkbar, um das exakte Heranfahren des Förderbandwagens an das Flugzeug zu erleichtern.

Die Bewegungen sowohl der Räder und/oder der Querachsen können direkt mittels einer Eingabeeinheit - insbesondere des Lenkrades für den Lenkeinschlag der Räder - vom Bediener vorgegeben werden, vorzugsweise werden notwendige Ausgleichsbewegungen, insbesondere der Stützen, von einer Steuerung bewirkt, die zumindest alle beweglichen Teile des Förderbandwagens steuert.

Die allesamt lenkbar ausgebildeten Räder, vorzugsweise vier Räder eines zweiachsigen Chassis - wobei "zweiachsig" nicht bedeutet, dass es zwei über die gesamte Breite des Förderbandwagens durchgehende Achskörper gibt, sondern die Räder durchaus eine Einzelrad-Aufhängung und Einzelrad-Lenkung besitzen können - ist so ausgebildet, dass die Vorderräder unabhängig von den Hinterrädern lenkbar sind, insbesondere
- wahlweise nur die Vorderräder oder die Hinterräder lenkbar eingestellt werden können, während die jeweils anderen Räder in ihrer momentanen Stellung und/oder in der Geradeausstellung arretierbar sind,
- die Lenkung wahlweise zwischen synchroner und gegensynchroner Auslenkung der Vorderräder und/oder der Hinterräder umgeschaltet werden kann,
- wobei vorzugsweise bei den beiden zuletzt genannten Betriebsmodi die Vorderräder und die Hinterräder um unterschiedliche Lenkwinkel gegenüber der Geradeausrichtung betrieben werden können und um unterschiedliche Lenkwinkel trotz nur einem am Lenkrad eingegebenem Drehwinkel auslenken können.

Dadurch ist es dem Bediener möglich, je nach Fahrsituation und insbesondere Zustand beim Annähern des Förderbandwagens an die Ladeluke des Flugzeuges den am besten geeigneten Fahrmodus auszuwählen.

Dabei kann die Steuerung selbsttätig - auch ohne Vorgabe durch den Fahrer - eine Vorwärtsfahrt und/oder Rückwärtsfahrt des Chassis zumindest um geringe Strecken bewirken und/oder einen Lenkeinschlag der Räder bei einem von der Steuerung selbst ausgewählten Lenkmodus/Betriebsmodus, wenn die Steuerung eine Ausgleichsbewegung durchführen muss, wie später beschrieben.

In aller Regel sind bei einem Förderbandwagen gemäß dem Stand der Technik die vordere Stütze und/oder die hintere Stütze am Hauptförderer zurückversetzt von dem jeweiligen Ende, also dem vorderen oder hinteren Ende, an dem Hauptförderer schwenkbar befestigt.

Dabei ist zumindest eine der beiden Stützen längenveränderbar, insbesondere als Hydraulikzylinder ausgebildet, zumindest wenn an keiner dieser beiden am Hauptförderer angreifenden Hauptstützen eine Zusatzstütze angreift, die mit ihrem anderen Ende am Chassis befestigt ist, und ihrerseits längenveränderbar, insbesondere als Hydraulikzylinder, ausgebildet ist.

In der Regel ist derzeit eine der beiden Stützen, meist die vordere Stütze, als Hydraulikzylinder ausgebildet, während die andere, meist die hintere Stütze, eine fixe Länge besitzt und mittels einer als Hydraulikzylinder ausgebildeten Hilfsstütze in ihrem Schwenkwinkel um ihre untere Schwenkachse gegenüber dem Chassis verschwenkt werden kann.

Wenn dabei die unteren Schwenkachsen der Stützen, insbesondere aller vorhandenen Stützen, in Längsrichtung gesteuert entlang des Chassis verfahrbar sind, indem sie insbesondere an in Längsrichtung verfahrbaren Schlitten angeordnet sind, kann die Steuerung selbsttätig notwendige Ausgleichsbewegungen eines der beiden Enden des Hauptförderers in Längsrichtung und/oder in der Vertikalen durchführen, indem sie nicht nur die vorhandenen Hydraulikzylinder ansteuert, sondern auch die Bewegung der unteren Schwenkachsen der Stützen in Längsrichtung.

Zu diesem Zweck sind die unteren Schwenkachsen der vorderen und/oder der hinteren Stütze vorzugsweise auf einem Schlitten angeordnet, insbesondere jeweils auf einem separaten Schlitten, wobei die beiden separaten Schlitten unabhängig voneinander in Längsrichtung entlang des Chassis gesteuert verfahren werden können.

Sofern an einer der direkt am Hauptförderer angreifenden Stützen, den Hauptstützen, eine Hilfsstütze angreift, ist deren untere Schwenkachse entweder auf dem gleichen Schlitten angeordnet wie die untere Schwenkachse der Hauptstütze, an der die Hilfsstütze angreift, oder auf einem eigenen Hilfsschlitten, insbesondere einem Hilfsschlitten, der auf dem Schlitten, der die Schwenkachse der Hauptstützen trägt, an der die Hilfsstütze angreift, verfahrbar in Längsrichtung ist.

Um zu vermeiden, dass dennoch auftretende Berührungen zwischen dem vorderen Ende des Hauptförderers und der Außenhaut des Flugzeuges dort zu Beschädigungen führen, sind die Kontaktrollen, die beidseits neben dem vorderen Ende des Hauptförderers vorhanden sind und über dieses vordere Ende vorstehend, zusätzlich gegenüber dem Hauptförderer gefedert beweglich befestigt, vorgespannt in die gegenüber dem vorderen Ende vorstehende Position.

Bei einer Kontaktierung werden also zunächst die Kontaktrollen relativ zum Hauptförderer zurückgeschoben und liegen nur mit einer geringen Anlagekraft entsprechend der Federkraft am Flugzeug an.

Ebenso wird versucht, Beschädigungen durch die beidseits neben dem Hauptförderer aufragende Reling zu vermeiden, indem diese ebenfalls in Verlaufsrichtung des Hauptförderers beweglich angeordnet sind und jede Reling am vorderen Ende einen Bumper aufweist, also ein weiches, elastisches Anschlag-Kissen, mit dem die Reling an der Außenhaut des Flugzeuges kontaktierend angelegt werden kann, ohne das Flugzeug zu beschädigen sodass zwischen Flugzeug und Reling keine Lücke verbleibt, durch die ein Gepäckstück oder ein Bediener herabfallen könnte.

Zu diesem Zweck ist jede der beiden Relings mittels einer Anlage-Vorrichtung am Hauptförderer befestigt. Dies kann eine einfache Feder sein, die die Reling in die nach vorn ausgefahrene Stellung vorspannt und die beim Fahren verriegelt werden kann, oder auch eine Verfahr-Vorrichtung, mittels der die Reling relativ zum Hauptförderer in dessen Verlaufssrichtung gesteuert verfahrbar ist, beispielsweise ein Arbeitszylinder wie etwa ein Hydraulikzylinder der mit einem permanenten Druck beaufschlagt werden kann.

Hinsichtlich des Verfahrens zum Betrieb eines Förderbandwagens müssen unterschiedliche Aufgabenstellungen berücksichtigt werden:
Die eine betrifft das Heranfahren des Förderbandwagens mit dem vorderen Ende seines Hauptförderers an oder in die Ladeluke eines Flugzeuges, vorzugsweise teilautomatisch oder vollautomatisch, indem durch Sensoren die Position des Hauptförderers und/oder des gesamten Förderbandwagens zum Flugzeug detektiert und der Steuerung gemeldet wird:
Zunächst wird der Förderbandwagen mit der in der Aufsicht betrachteten Längsmitte des Hauptförderers, die in der Realität eine vertikal stehende Längsmittelebene ist, etwa parallel zur Mitten-Lotrechten der Ladeluke, ausgerichtet. Die Mitten-Lotrechten verläuft lotrecht zur Luken-Querstrecke, welche sich in Richtung der Breite der Ladeluke horizontal erstreckt.

Die Ausrichtung soll genau erfolgen, bis ein Toleranzwinkel α zwischen beiden unterschritten wird, was mittels entsprechender Sensoren gemessen werden kann.

Diese Ausrichtung erfolgt entweder durch Heranfahren des Förderbandwagens in Richtung Flugzeug bei gegen-synchronem Anlenken der Vorderräder oder wahlweise des Anlenkens nur der Vorderräder oder der Hinterräder. Das Lenken und die Wahl des entsprechenden Lenkmodus wird dabei vorzugsweise noch vom Bediener durchgeführt oder zumindest initiiert.

Gleichzeitig oder nach dieser Ausrichtung hinsichtlich der Winkellage wird beim Heranfahren der Förderbandwagen mit seiner Längsmitte in der Aufsicht betrachtet fluchtend zur Mitten-Lotrechten der Luken-Querstrecke ausgerichtet, bis ein Toleranzabstand A dazwischen unterschritten wird.

Dies erfolgt am besten durch synchrones Auslenken von Vorderrädern und Hinterrädern, also eine Schrägfahrt des Förderbandwagens. Auch hier werden die Wahl des Lenkmodus und der Lenkeinschlag vorzugsweise vom Bediener durchgeführt oder zumindest initiiert.

Dabei wird vorzugsweise sowohl das Erreichen und Unterschreiten des Toleranzwinkels α und/oder auch des Toleranzabstandes A automatisch überprüft.

Sofern die entsprechende Sensorik vorhanden ist, kann die Steuerung jedoch auch beide Ausrichtvorgänge selbsttätig durchführen, wobei der Start und gegebenenfalls auch das Beenden dieser gleichzeitigen Annäherungs- und Ausrichtebewegungen vorzugsweise noch vom Bediener gegeben wird, das Beenden jedoch von der Steuerung, unterstützt mittels entsprechender Abstandssensoren, durchgeführt werden kann.

Die Winkelausrichtung einerseits und die Abstandsausrichtung andererseits kann gleichzeitig erfolgen, insbesondere indem die Vorderräder einerseits und Hinterräder andererseits - obwohl der jeweilige Lenkmodus die Lenkbarkeit von beiden ermöglicht - um unterschiedliche Lenkeinschläge eingestellt werden, was eine Mischung aus Kurvenfahrt und Schrägfahrt ergibt.

Das gerade Annähern des Hauptförderers in Längsrichtung kann - vom Bediener oder von der Steuerung bewirkt - wahlweise durch Vorwärtsfahrt des Chassis bei vier in Geradeausrichtung eingestellten Rädern erfolgen oder bei stillstehendem Chassis durch Verlagern des Hauptförderers in Längsrichtung relativ zum Chassis.

Auf diese Art und Weise kann der Förderbandwagen und insbesondere das vordere Ende des Hauptförderers sehr schnell und mit geringem benötigtem Rangierraum in die gewünschte Arbeitsposition relativ zum Flugzeug gebracht werden.

Die andere Aufgabenstellung besteht darin, dass bei einer vom Bediener vorgegebenen Veränderung der Position - bei stillstehendem Chassis - des vorderen oder hinteren Endes des Hauptförderers, insbesondere dessen Höhenlage, eine Ausgleichsbewegung des anderen Endes des Hauptförderers - vorzugsweise automatisch mittels der Steuerung - durchgeführt wird, um dieses andere Ende des Hauptförderers in Position zu halten.

Der Bediener muss solche Positionsveränderungen eines Endes durchführen
- entweder am hinteren Ende des Hauptförderers, um dieses an das momentane Beladeniveau des anliefernden Gepäckswagens anzupassen
- oder am vorderen Ende des Hauptförderers, um dieses an die sich während des Ladevorganges verändernde Höhenlage des Bodens des Frachtraumes anzupassen.

Hierfür wird an diesem anderen Ende eine Ausgleichsbewegung durchgeführt, indem beispielsweise die den Hauptförderer abstützenden Stützen zusammen mit dem Hauptförderer synchron in Längsrichtung relativ zum Chassis verfahren werden, um eine nur horizontale Ausgleichsbewegung zu bewirken.

Um eine vertikale Ausgleichsbewegung zu bewirken, kann die dieses andere Ende abstützende Stütze entweder in ihrer Länge verändert werden und/oder deren unterer Befestigungspunkt gegenüber dem Chassis in Längsrichtung verfahren werden.

Sofern dies eine zusätzliche Verlagerung in Längsrichtung dieses anderen Endes bewirkt, muss dies natürlich bei der Ermittlung und Durchführung der horizontalen Ausgleichsbewegung berücksichtigt werden und umgekehrt.

Falls an einer der beiden Hauptstützen eine Hubvorrichtung, insbesondere ein Hydraulikzylinder, in deren mittleren Bereich angreift, um den Schwenkwinkel dieser Stütze um deren untere Schwenkachse gegenüber dem Chassis zu verändern, kann bei einem Verfahren des unteren Endes dieser Stütze auch das untere Ende der Hilfsstütze synchron mit dem unteren Ende der betreffenden Hauptstütze in Längsrichtung zum Chassis verfahren werden und/oder mittels der Hubvorrichtung diese Hauptstütze angehoben oder abgesenkt werden, um die notwendige Ausgleichsbewegung zu bewirken.

### c) Ausführungsbeispiele

Ausführungsformen gemäß der Erfindung sind im Folgenden beispielhaft näher beschrieben. Es zeigen:
- **Figur 1a:**: einen Förderbandwagen in perspektivische Ansicht mit hochgestelltem Hauptförderer,
- **Figur 1b, c:**: einen Förderbandwagen gemäß dem Stand der Technik im Einsatz in der Seitenansicht sowie in der Aufsicht,
- **Figur 2a:**: einen erfindungsgemäßen Förderbandwagen in der Seitenansicht,
- **Figur 2b, 2c:**: den erfindungsgemäßen Förderbandwagen in der Aufsicht in unterschiedlichen Lenk-Stellungen,
- **Figur 3:**: die Annäherung des erfindungsgemäßen Förderbandwagens an die Ladeluke eines Flugzeuges in der Aufsicht,
- **Figur 4a:**: eine Prinzipdarstellung der Kinematik des erfindungsgemäßen Förderbandwagens,
- **Figur 4b:**: eine Vergrößerung aus Figur 4a.

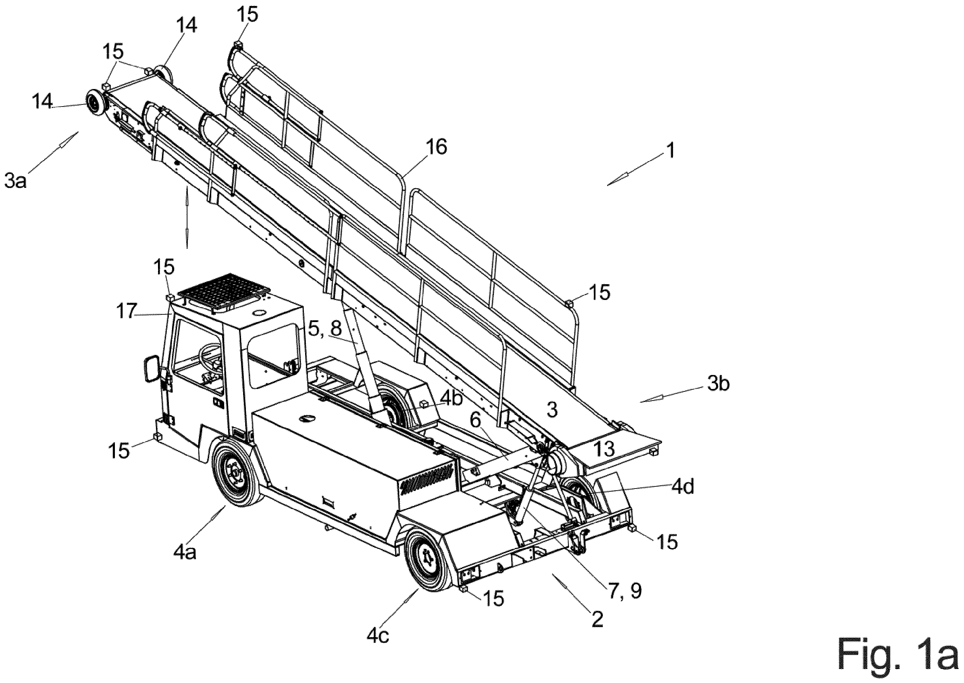

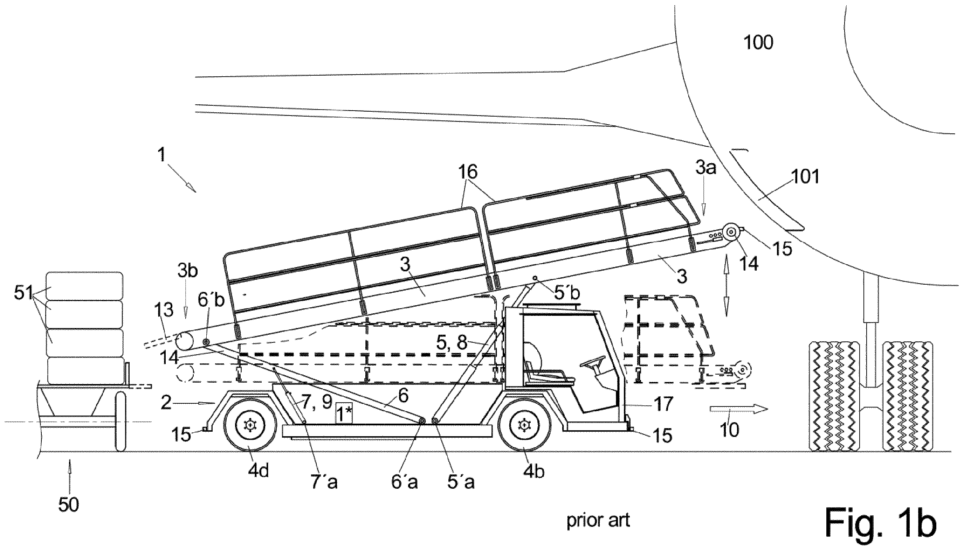

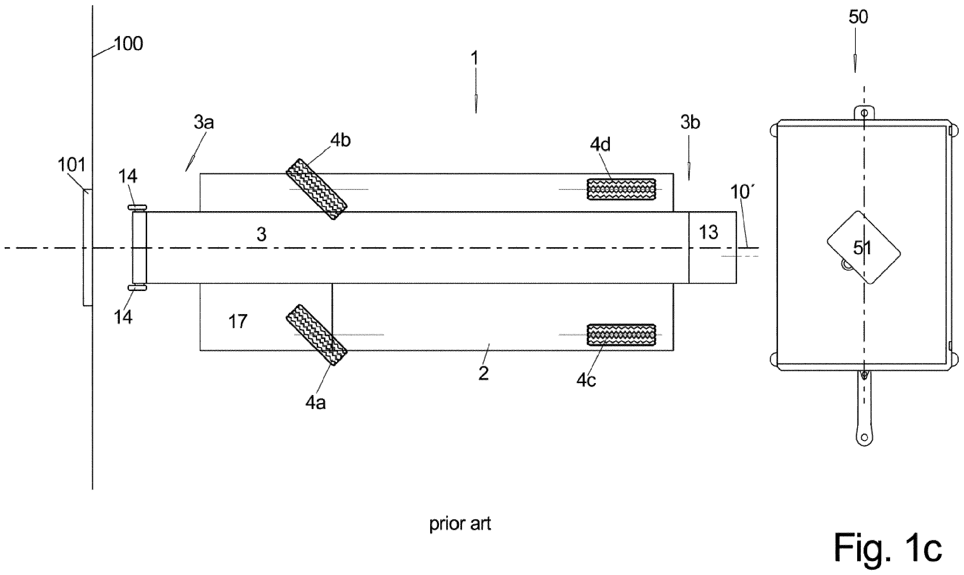

Die **Figuren 1 a****,** **b****,** **c** zeigen einen Förderbandwagen 1 gemäß dem Stand der Technik, wobei die perspektivische Ansicht gemäß **Figur 1a** auch die erfindungsgemäße Variante zeigen kann, da die erfindungsgemäßen Besonderheiten in dieser Ansicht nicht zu erkennen sind.

Wie am besten **Figur 1b** zeigt, besteht ein solcher Förderbandwagen 1 aus einem selbstfahrenden Chassis 2, auf dem ein in Längsrichtung 10, der Geradeausfahrtrichtung des Chassis 2, ein Hauptförderer 3 angeordnet ist, der darauf aufgelegte Gepäckstücke in dieser Längsrichtung 10 transportieren kann.

Der Hauptförderer 3 steht mit seinem vorderen Ende 3a in der Seitenansicht betrachtet über die auf dem Chassis 2 aufgebaute Fahrerkabine 17, die sich in der Aufsicht betrachtet seitlich neben dem Ablagebereich für den Hauptförderer 3 befindet, vor und ebenso mit seinem hinteren Ende über das hintere Ende des Chassis 2 vor.

Der Hauptförderer 3 kann von seiner auf dem Chassis 2 abgelegten, horizontalen Transportstellung, in der er mit seiner links und rechts des Hauptförderers 3a aufragenden Reling 16 kaum über die Höhe der Fahrerkabine 17 nach oben vorsteht, angehoben werden, vorzugsweise in eine schräg nach vorn aufragende Stellung mithilfe einer vorderen Stütze 5 und einer hinteren Stütze 6, die jeweils zurückversetzt vom vorderen bzw. hinteren Ende 3a, 3b mit ihrer oberen Schwenkachse 5'b und 6'b am Hauptförderer 3 gelenkig befestigt sind und mit ihrem anderen Ende, der unteren Schwenkachse 5'a, 6'a, am Chassis 2 im Bereich zwischen dessen Vorderrädern 4a, b und Hinterrädern 4c, d.

In diesem Fall ist die vordere Stütze 5 als längenveränderbares Element in Form eines Hydraulikzylinders 8 ausgebildet, während die hintere Stütze 6 eine starre Stütze ist, jedoch zwischen dem Chassis 2und dieser hinteren Stütze 6 - zwischen deren beiden Schwenkachsen 6'a und 6'b angreifend - eine Hilfsstütze 7 ebenfalls in Form eines Hydraulikzylinders 9 angeordnet ist.

Ist dieser hintere Hydraulikzylinder 9 vollständig eingefahren und ebenso der vordere Hydraulikzylinder 8, befindet sich der Hauptförderer 3 in der abgesenkten horizontalen Lage, der "Transportposition".

Durch Ausfahren der beiden Hydraulikzylinder 8, 9, was unabhängig voneinander angesteuert werden kann, kann
- das vordere Ende 3a so hoch gehoben werden, dass es mit der Ladeluke 101 im Rumpf eines Flugzeuges 100 fluchtet und
- das hintere Ende 3b auf eine solche Höhe gehoben werden, dass ein Auflegen von Gepäckstücken 51 von einem an dieses hintere Ende herangefahrenen Gepäckswagens 50 mit möglichst geringem Kraftaufwand möglich ist.

Da vor allem das Anheben des vorderen Endes 3a oft gleichzeitig mit dem Heranfahren des Chassis 2 an das Flugzeug 100 erfolgt, können sehr leicht Berührungen der Außenhaut des Flugzeuges 100 durch das vordere Ende 3a des Hauptförderers 3 eintreten.

Um dies zu vermeiden, sind einerseits am vorderen Ende des Hauptförderers 3 - und auch an anderen Stellen, wie etwa dem vorderen und hinteren Ende des Chassis 2 - Sensoren 15 angeordnet, die das Annähern und/oder Kontaktieren an die Steuerung 1' des Förderbandwagens 1 melden. Bei den Sensoren 15 kann es sich auch um Kameras handeln.

Ferner sind am vorderen Ende 3a des Hauptförderers 3 und über diese geringfügig vorstehend Kontaktrollen 14 seitlich angebracht, um bei Kontaktierung der Außenhaut des Flugzeuges 100 oder des Bodens des Laderaumes zumindest ein Abrollen anstelle eines Entlangschleifens zu ermöglichen.

Am hinteren Ende 3b ist häufig ein darüber hinaus vorstehender Auflagetisch 13 für Gepäckstücke angeordnet, dessen Neigung gegenüber dem Hauptförderer 3 häufig separat einstellbar ist.

Bei den herkömmlichen Bauformen eines solchen zweiachsigen Förderbandwagens 1 sind - wie in **Figur 1c** dargestellt - meist die Vorderräder 4a, b lenkbar, die Hinterräder 4c, d dagegen nicht.

Bei einigen Modellen sind umgekehrt stattdessen nur die Hinterräder 4c, d lenkbar.

Unabhängig davon besteht immer das Problem, dass beim Fahren mit Lenkeinschlag das vordere Ende 3a des Hauptförderers 3 in der Aufsicht betrachtet eine bogenförmige Schwenkbewegung mit einem Radius abhängig davon, ob die vorderen oder hinteren Räder gelenkt werden, vollzieht.

Auf diese Art und Weise ist es für den Fahrer schwierig, bei einem Heranfahren schräg zur Längsrichtung 100' des Flugzeuges 100 mit dem vorderen Ende des Hauptförderers 3 genau im rechten Winkel zur Außenwand des Flugzeuges 100 an dieses heran zu fahren, insbesondere wenn das vordere Ende 3a des Hauptförderers 3 in die Ladeluke 101 hinein vorstehend eingefahren werden soll.

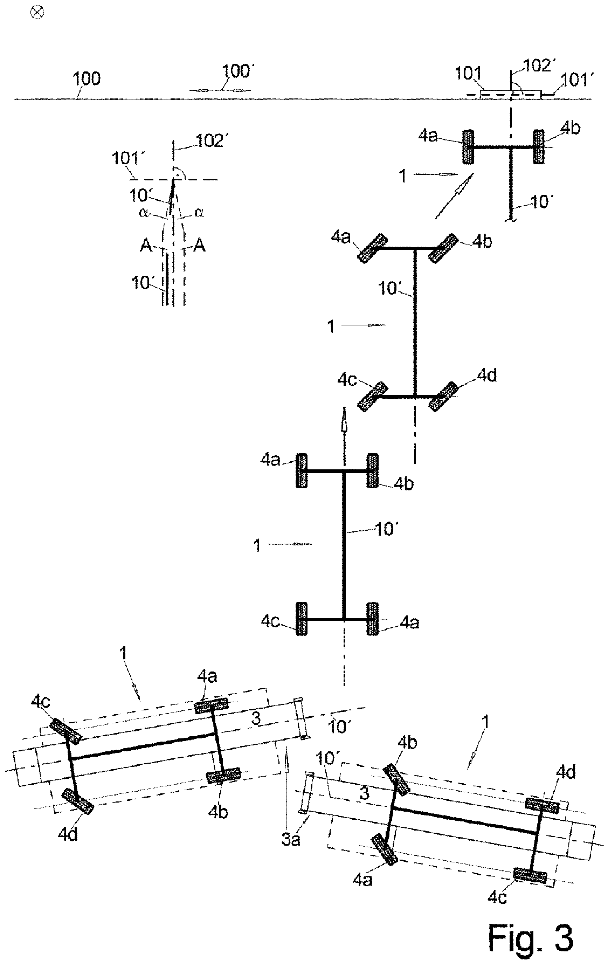

Nur falls seitlich neben dem Flugzeug 100 ausreichend viel Platz vorhanden ist, um zunächst den Förderbandwagen 1 mit weitem Abstand zum Flugzeug 100 heran zu fahren und während des Heranfahrens die Längsmitte 3' des Hauptförderers 3 genau fluchtend zur Mittel-Lotrechten 102' auszurichten, kann dies ohne Probleme vom Fahrer bewältigt werden, wenn er einen Förderbandwagen mit nur einer lenkbaren Achse - wie in **Figur 3** im unteren Bereich dargestellt - zur Verfügung hat. Dieser Raum fehlt jedoch häufig, was eine solche Ausrichtung unmittelbar am Flugzeug 100 erschwert.

Sind jedoch alle vier Räder 4a - d lenkbar, wie bei dem erfindungsgemäßen Förderbandwagen1 im oberen Bereich der **Figur 3** dargestellt, und zwar mit synchronem Lenkeinschlag an allen vier Rädern, so ist die Vorgehensweise einfacher:
Während des Heranfahrens an das Flugzeug 100 muss der Fahrer zunächst lediglich die Längsmitte 10' des Hauptförderers 3 parallel zur Mittel-Lotrechten 102' ausrichten, wobei dies natürlich nie vollständig exakt gelingt, weshalb ein Toleranzwinkel ± α zur Mittel-Lotrechten 102' akzeptabel ist.

Ob er diese Winkelstellung erreicht hat, kann ihm unterstützend von einer Sensorik ermittelt und mitgeteilt werden, um sich nicht auf eigene optische Schätzungen alleine verlassen zu müssen.

In der Regel bewirkt eine solche Winkel-Ausrichtung während der Annäherung an das Flugzeug 100, dass bei Erreichen der richtigen Winkellage dann jedoch ein seitlicher Versatz dieser Längsmitte 10' zur Mitten-Lotrechten 102' besteht.

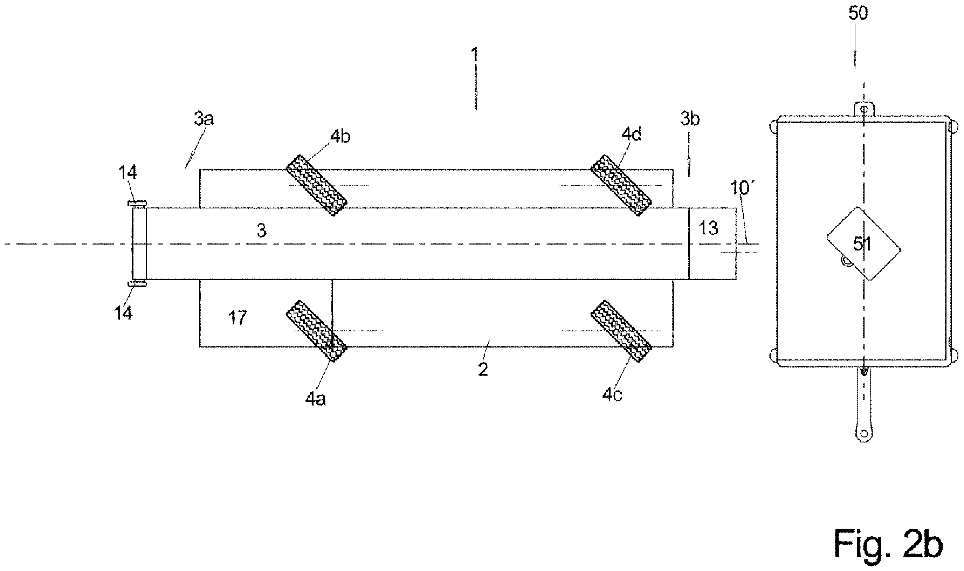

Sind alle vier Räder 4a bis 4b synchron auslenkbar gemäß **Figur 2b****,** kann dies durch Schrägfahrt zur Mitten-Lotrechten 102' verringert werden, ohne die erzielte Ausrichtung zur Mitten-Lotrechten 102' wieder zu verlieren.

Auch für die Annäherung der Längsmitte 10' des Förderbandwagens 1 an die Mitten-Lotrechte 102' gibt es einen Toleranzbereich in Form eines positiven oder negativen Toleranzabstandes A zur Mitten-Lotrechten 102'.

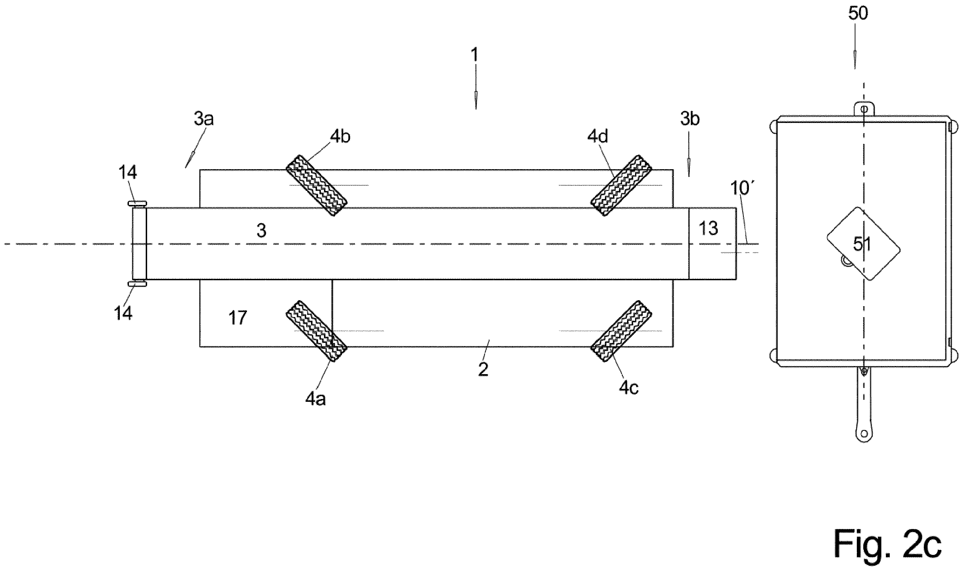

Anhand der **Figur 3** ist auch vorstellbar, dass der Kurvenradius des Förderbandwagens 1 und damit der für das Anfahren des Flugzeuges 100 benötigte Platz zusätzlich drastisch reduziert werden kann, wenn die vier Räder 4a bis d gegensynchron gemäß **Figur 2c** einlenkbar sind, also der Lenkeinschlag der Hinterräder 4c, d den gleichen Betrag, aber die umgekehrte Richtung wie derjenige der Vorderräder 4a, 4b besitzt.

Im Idealfall kann die Lenkung des Förderbandwagens frei hinsichtlich des Lenkmodus gewählt werden, also
- ein synchroner Lenkeinschlag von Vorder- und Hinterrädern
- oder ein gegensynchroner Lenkeinschlag von Vorderrädern und Hinterrädern
- oder eine Fixierung der Vorderräder oder der Hinterräder in Geradeausstellung oder in einer beliebigen momentanen Winkelstellung und weiteres Lenken lediglich der demgegenüber anderen Räder.

Beim Heranfahren des vorderen Endes 3a des Hauptförderers 3 an die Ladeluke 101 soll sich die Oberseite des vorderen Endes 3a
- beim Entladen des Flugzeuges 100 etwas unterhalb des Ladebodens im Flugzeug befinden, um von dort Gepäckstücke auf den Hauptförderer 3 hinunterschieben zu können, möglichst ohne dass das vordere Ende, also die Kontaktrollen 14, darunter die Außenhaut des Flugzeuges 100 berühren, die in diesem Bereich meist auch nicht senkrecht verläuft, sondern nach unten Richtung Flugzeugmitte gekrümmt ist,
- beim Beladen des Flugzeuges 100 höher liegt als der Ladeboden und insbesondere das vordere Ende 3a des Hauptförderers 3 durch die Ladeluke 101 in den Frachtraum des Flugzeuges 100 hineinragen soll, sodass die Gepäck-Verlader im Laderaum das vom Hauptförderer 3 angelieferte Gepäckstück bereits auf einer Höhe deutlich über der Höhe des Ladebodens angeliefert bekommen und damit weniger weit hochheben müssen.

Gerade für dieses Hineinfahren in den Frachtraum ist die Ausrichtung der Längsmitte 10' zur Mitten-Lotrechten 102' der Ladeluke 101 wichtig.

Wie **Figur 1b** zeigt, sind die Gepäckwägen 50 in der Regel mit mehreren Lagen von Gepäckstücken 51 beladen. Um möglichst wenig Kraft beim Herüberziehen eines Gepäcksstückes 51 vom Gepäckwagen 50 auf den Ladentisch 13 des Förderbandwagens 1 zu benötigen, wird das hintere Ende 3b des Hauptförderers 3 und sofern vorhanden damit auch der Ladetisch 13 möglichst genau auf eine Höhe knapp unterhalb der momentan vom Gepäckwagen 50 zu entnehmenden Schicht von Gepäckstücken 51 eingestellt.

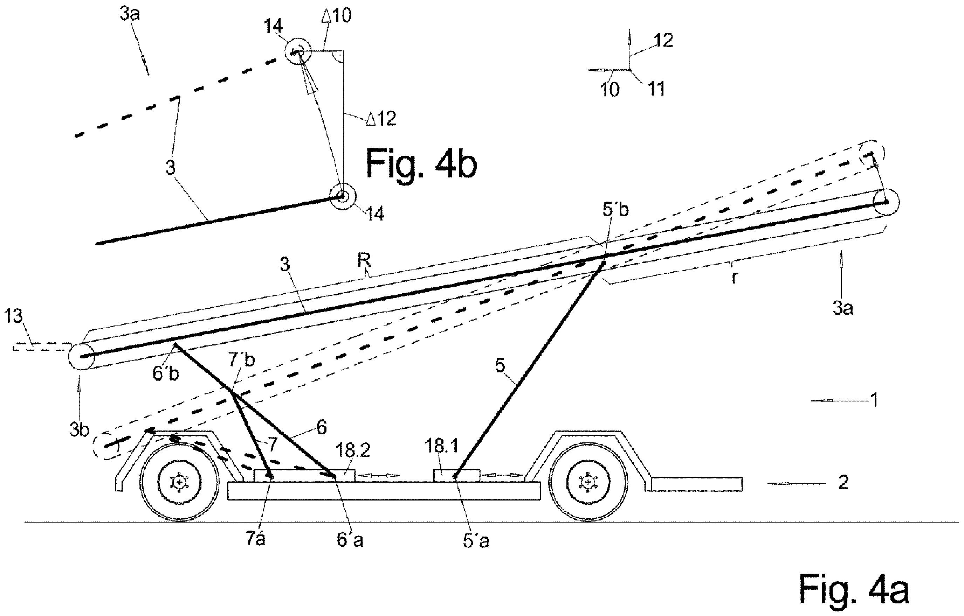

Hierfür wird - wie in **Figur 4a** schematisch dargestellt - die als Hydraulikzylinder 9 ausgeführte Hilfsstütze 7 in ihrer Länge verändert, wodurch, beispielsweise beim Entladen des Gepäckwagens 50 für das Beladen des Flugzeuges 100, das hintere Ende 3b - und sofern vorhanden auch ein dortiger Ladetisch 13 - nach unten bewegt wird, jedoch in einer bogenförmigen Bewegung um die obere Schwenkachse 5'b der vorderen Stütze 5, sofern diese in unveränderter Position verbleibt.

Dies stellt jedoch eine vereinfachende Annahme dar, denn durch Verringerung der Länge der Hilfsstütze 7 schwenkt einerseits die obere Schwenkachse 6'b der hinteren Stütze 6 in einer Bogenbewegung um deren untere Schwenkachse 6'a nach unten, wodurch die obere Schwenkachse 6'b herabschwenkt und sich dabei auch etwas nach hinten bewegt, und dadurch auch wie gewünscht das hintere Ende 3b des Hauptförderers 3 bezüglich der oberen vorderen Schwenkachse 5' b mit dem Radius R nach unten schwenkt. Dadurch wird jedoch auch die obere Schwenkachse 5'b der anderen Stütze 5 einerseits nach hinten gezogen, also verschwenkt um deren untere Schwenkachse 5' a, andererseits das vordere Ende 3a des Hauptförderers 3 mit dem Radius r um die obere Schwenkachse 5'b der vorderen Stütze 5 nach oben geschwenkt bewegt, wie in den Figuren 4a und 4b dargestellt.

Das vordere Ende 3a - in diesem Fall symbolisiert durch den Mittelpunkt der in der Seitenansicht betrachteten Kontaktrollen 14 - vollzieht also zumindest eine Schwenkbewegung nach oben, sodass sich zwischen Ausgangsposition und Endposition eine vertikale Distanzstrecke Δ12 und eine horizontale Distanzstrecke Δ10 ergibt - zusätzlich zu der zuvor beschriebenen Lageveränderung des vorderen Endes aufgrund Veränderung der oberen Schwenkachse 5'b der vorderen Stütze 5.

Um zu vermeiden, dass durch diese unerwünschte Bewegung des vorderen Endes ein unerwünschter Kontakt mit dem Flugzeug 100 eintritt, werden diese auftretenden Differenzstrecken Δ10 und Δ12 automatisch mittels der Steuerung 1* ausgeglichen, wofür mehrere Möglichkeiten zur Verfügung stehen:
Am Beispiel der **Figur 4a** ist die vordere Stütze 5 mit ihrem unteren Ende in einem Schlitten 18.1 gelagert, und die hintere Stütze 6 sowie die daran angreifende Hilfsstütze 7 mit ihren unteren Enden in einem zweiten Schlitten 18.2, die beide und unabhängig voneinander in Längsrichtung 10 entlang des Chassis 2 gesteuert verlagerbar sind.

Eine vertikale Distanzstrecke Δ12 kann ausgeglichen werden durch eine - gegebenenfalls zusätzliche - Verfahrung des Schlittens 18.1, um die obere Schwenkachse 5'b der vorderen Stütze 5 nach oben oder unten zu bewegen, was jedoch gleichzeitig auch eine horizontale Koppel-Bewegung des vorderen Endes 3a des Hauptförderers 3 in Längsrichtung 10 bewirkt, die kompensiert werden muss.

Eine horizontale Distanzstrecke Δ10 und ggfs. auch die horizontale Koppel-Bewegung kann ausgeglichen werden durch eine synchrone Verfahrung der beiden Schlitten 18.1, 18.2 entgegen der sich ergebenden Distanzstrecke Δ10 und ggfs. horizontalen Koppel-Bewegung.

Falls die vordere Stütze 5 als längenveränderbares Element, insbesondere als Hydraulikzylinder, ausgeführt ist, kann stattdessen auch eine Längenveränderung der vorderen Stütze 5 durchgeführt werden.

Im Ergebnis ist vorgesehen, dass der Bediener mittels einer Eingabeeinheit lediglich vorgibt, um welchen Betrag sich das hintere Ende 3b, insbesondere der daran angeordnete Ladentisch 13 - heben oder senken soll, und zwar vorzugsweise ohne gleichzeitige Bewegung in Längsrichtung, um den horizontalen Abstand zum dahinter stehenden Gepäckwagen nicht zu verändern. Die Steuerung 1* soll dadurch automatisch die Stützen 5, 6, 7 und/oder die Schlitten 18.1, 18.2 so ansteuern, dass das vordere Ende 3a des Hauptförderers 3, - sei es der Mittelpunkt der vorderen Umlenkrollen des Hauptförderers 3 oder der Mittelpunkt der Kontaktrollen 14 - hierbei in unveränderter Position bleibt.

Analog soll es erfindungsgemäß möglich sein, dass der Bediener eine Verlagerung des vorderen Endes 3a des Hauptförderers 3 vorgibt, insbesondere getrennt nach horizontaler Verlagerung in Längsrichtung oder vertikaler Verlagerung, beispielsweise weil sich die Höhe des Ladebodens des Frachtraumes im Flugzeug 100 verändert durch Ausheben des Flugzeug-Fahrwerkes bei zunehmender Entladung, und dabei wiederum durch die Steuerung 1* automatisch die Stützen 5, 6, 7 und/oder die Schlitten 18.1, 18.2 bzw. alle vorhandenen Schlitten so angesteuert werden, dass das hintere Ende 3b des Hauptförderers 3, insbesondere die in der Seitenansicht betrachtete Mitte der hinteren Umlenkwalze des Hauptförderers 3, in unveränderter Position verbleibt, zumindest hinsichtlich der Höhe gegenüber dem Chassis 2.

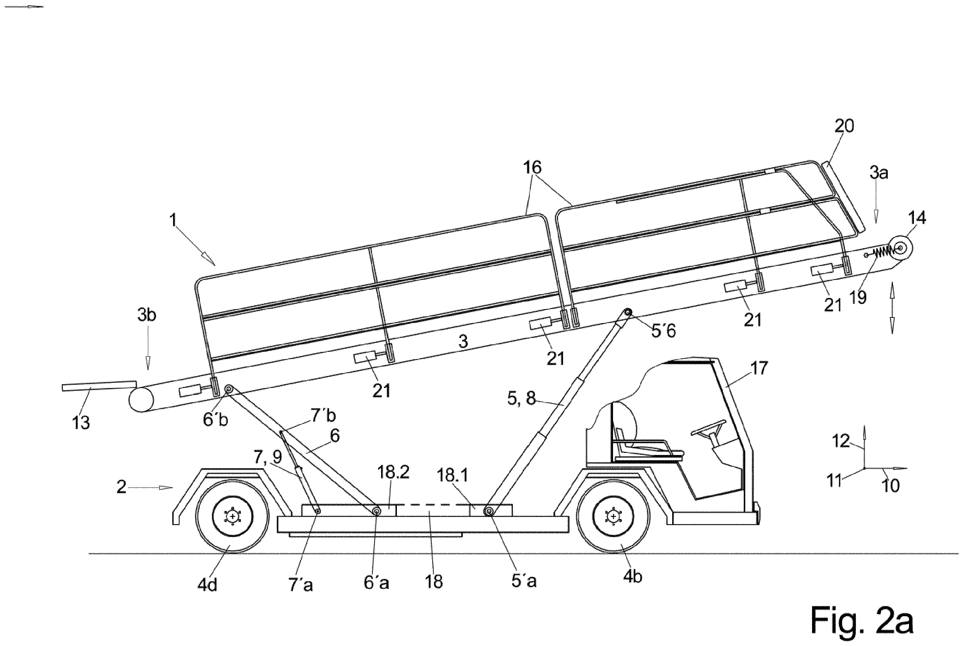

In **Figur 2a** ist ferner dargestellt, dass die Kontaktrollen 14 am vorderen Ende des Hauptförderers 3 relativ zu diesem, insbesondere in dessen Verlaufsrichtung, beweglich angeordnet sind, vorgespannt mittels einer Feder 19 in die über das vordere Ende 3a vorstehende Richtung.

Die Reling 16 die jeweils beidseits neben dem Hauptförderer 3 nach oben aufragt - jede der beiden Relings 16 separat oder beide gemeinsam -, Ist ebenfalls relativ zum Hauptförderer 3 in dessen Verlaufsrichtung beweglich daran mittels einer Anlage-Vorrichtung 21 befestigt, um die Reling 16 ohne Lücke dazwischen am Rumpf des Flugzeuges 100 anlegen zu können und weist zu diesem Zweck am vorderen Ende einen Bumper 20 auf zum beschädigungsfreien Anlegen an der Außenhaut des Flugzeuges 100.

Die Anlage-Vorrichtung 21 kann eine einfache Feder sein, die die Reling 16 in die nach vorn ausgefahrene Stellung vorspannt, ist im dargestellten Fall jedoch eine Anlage-Vorrichtung 21 in Form eines Hydraulikzylinders 21, der hier an jeder der Stützen der Reling 16 dargestellt ist. In der Praxis kann auch die gesamte Reling 16 entlang einer Führung am Hauptförderer 3 verschiebbar ausgebildet sein, wobei dann eine einzige Anlage-Vorrichtung 21 wie etwa ein Hydraulikzylinder 21, oder zumindest eine auf jeder Seite, für das Bewegen der Reling 16 genügt.

### BEZUGSZEICHENLISTE

- 1: Förderbandwagen
- 1*: Steuerung
- 2: Chassis
- 3: Hauptförderer
- 4a -d: Rad
- 5: vordere Stütze
- 5'a, 5'b: Schwenkachse
- 6: hintere Stütze
- 6'a, 6'b: Schwenkachse
- 7: Hilfsstütze
- 7'a, 7'b: Schwenkachse
- 8: Hydraulikzylinder
- 9: Hydraulikzylinder
- 10: Längsrichtung, Geradeaus-Richtung
- 10': Längsmitte
- 11: horizontale Querrichtung
- 12: Vertikale
- 13: Auflagetisch
- 14: Kontaktrolle
- 15: Sensor
- 16: Reling
- 17: Fahrerkabine
- 18,18.1,18.2: Schlitten
- 19: Feder
- 20: Bumper
- 21: Anlage-Vorrichtung
- 50: Gepäckwagen
- 51: Gepäckstück

- 100: Flugzeug
- 101: Ladeluke
- 101': Luken-Querachse
- 102': Mitten-Lotrechte

## Patentansprüche

1. **Förderbandwagen** (1) mit
- einem Chassis (2)
- welches vier Räder (4a - d) aufweist, von denen mindestens zwei Räder (4a, b) lenkbar sind,
- einem anhebbar auf dem Chassis (2) angeordneten Hauptförderer (3) mit einem höher als das hintere Ende (3b) anhebbaren vorderen Ende (3a),
- einer vorderen Stütze (5) und einer hinteren Stütze (6), die jeweils am Hauptförderer (3) einerseits und am Chassis (2) andererseits um jeweils eine quer verlaufende Schwenkachse (5'a, 5'b, 6'a, 6'b) schwenkbar befestigt sind,
**dadurch gekennzeichnet, dass**
- die unteren Querachsen (5'a, 6'a) in Längsrichtung (10) entlang des Chassis (2) gesteuert verfahrbar sind, so dass der Hauptförderer (3) in Längsrichtung (10) relativ zum Chassis (2) verlagerbar ist,
- eine Steuerung (1*) vorhanden ist, die zumindest alle beweglichen Teile des Förderbandwagens (1) in ihrer Bewegung steuert.

2. Förderbandwagen nach Anspruch 1,
**dadurch gekennzeichnet, dass**
- alle vier Räder (4a - d) gesteuert lenkbar sind.

3. Förderbandwagen nach Anspruch 2,
**dadurch gekennzeichnet, dass**
- das Chassis (2) so ausgebildet ist, dass die Vorderräder (4a, b) unabhängig von den Hinterrädern (4c, d) lenkbar sind,
- insbesondere wahlweise die Vorderräder (4a, b) oder die Hinterräder (4c, d) in der Geradeausstellung arretierbar sind.

4. Förderbandwagen nach Anspruch 2 oder 3,
**dadurch gekennzeichnet, dass**
- das Chassis (2) so ausgebildet ist, dass die Lenkung der Räder zwischen einer synchronen und einer gegen-synchronen Anlenkung der Vorderräder (4a, b) und der Hinterräder (4c, d) umgeschaltet werden kann,
- insbesondere in beiden Betriebsmodi die Vorderräder (4a, b) und die Hinterräder (4c, d) mit unterschiedlicher momentanen Lenkwinkel gegenüber der Geradeaus-Richtung (10) betrieben werden können.
(Stützkonstruktion)

5. Förderbandwagen nach einem der vorhergehenden Ansprüche,
**dadurch gekennzeichnet, dass**
die vordere Stütze (5) und/oder die hintere Stütze (6) zurückversetzt vom vorderen bzw. hinteren Ende (3a, b) des Hauptförderers (3) an diesem angreifen.

6. Förderbandwagen nach einem der vorhergehenden Ansprüche,
**dadurch gekennzeichnet, dass**
wenigstens eine der Stützen (5, 6), insbesondere die vordere Stütze (5), längenveränderbar, insbesondere teleskopierbar, ist.

7. Förderbandwagen nach einem der vorhergehenden Ansprüche,
**dadurch gekennzeichnet, dass**
an wenigstens einer der Stützen (5, 6) abseits deren Schwenkachsen eine Hilfsstütze (7) angreift zum Festlegen der Neigung dieser Stütze (5 oder 6), insbesondere in Form einer Hubvorrichtung für diese Stütze (5 oder 6), insbesondere indem diese Stütze (5 oder 6) ein Hydraulikzylinder (9) ist oder ihre untere Schwenkachse (7' b) in Längsrichtung (10) verfahrbar gegenüber dem Chassis (2) ist.

8. Förderbandwagen nach Anspruch 7,
**dadurch gekennzeichnet, dass**
die unteren Schwenkachsen (5'a, 6'a, 7'a) der vorderen Stütze (5) und/oder der hinteren Stütze (6) und/oder der Hilfsstütze (7) auf einem in Längsrichtung (10) gesteuert verfahrbaren gemeinsamen Schlitten (18) oder separaten Schlitten (18.1, 18.2) angeordnet sind.

9. Förderbandwagen nach einem derAnsprüche 1 bis 7,
**dadurch gekennzeichnet, dass**
- die unteren Schwenkachsen (5'a, 6'a) der vorderen Stütze (5) und/oder der hinteren Stütze (6) auf einem Schlitten,
- insbesondere auf separaten Schlitten (18.1, 18.2) angeordnet sind.

10. Förderbandwagen nach Anspruch 7,
**dadurch gekennzeichnet, dass**
die untere Schwenkachse (7'a) der Hilfsstütze (7)
- entweder auf demselben Schlitten (18.2) angeordnet ist wie die Stütze, an der die Hilfsstütze (7) mit ihrer oberen Schwenkachse (7'b) angreift
- oder auf einem eigenen Hilfs-Schlitten,
- der insbesondere auf dem Schlitten (18.2) in Längsrichtung (10) verfahrbar ist, an dem die untere Schwenkachse derjenigen Stütze (5, 6) angeordnet ist, an der die Hilfsstütze (7) angreift.

11. Förderbandwagen nach einem der vorhergehenden Ansprüche,
**dadurch gekennzeichnet, dass**
am vorderen Ende (3a) des Hauptförderers (3), auf beiden Seiten, beweglich angeordnete und über diese nach vorne vorstehende Kontaktrollen (14) angebracht sind, welche in ihre über das vordere Ende (3a) ausgefahrene Stellung vorgespannt sind.

12. Förderbandwagen nach einem der vorhergehenden Ansprüche,
**dadurch gekennzeichnet, dass**
eine beidseits des Hauptförderers (3) beweglich in dessen Verlaufsrichtung angeordnete und nach oben aufragende Reling (16) am vorderen Ende einen Bumper (20) aufweist und mittels einer Anlage-Vorrichtung (21) an dem Hauptförderer (3) befestigt ist, wobei die Anlage-Vorrichtung (21) insbesondere
- entweder eine die Reling (16) in Richtung vorderes Ende (3a) des Hauptförderers (3) vorspannende Feder ist
- oder eine die Reling (16) in Verlaufsrichtung des Hauptförderers (3) bewegende Verfahr-Vorrichtung, insbesondere ein Arbeitszylinder (21), insbesondere ein Hydraulikzylinder (21) oder ein Pneumatikzylinder (21) ist.

13. **Verfahren** zum Betrieb eines Förderbandwagens (1) nach einem der vorhergehenden Ansprüche, indem beim Heranfahren des Förderbandwagens (1) mit dem vorderen Ende (3a) an eine in der Aufsicht betrachtete Soll-Position, der Förderbandwagen (1),
- durch Verlagern des Hauptförderers (3) in Längsrichtung (10) nach vorne relativ zum Chassis (2) angenähert wird.

14. Verfahren nach Anspruch 13,
**dadurch gekennzeichnet, dass**
der Förderbandwagen (1), insbesondere automatisch,
- mit der Längsmittelebene (10') des Hauptförderers (3) etwa parallel zur Mitten-Lotrechten (102'), die lotrecht zur Luken-Querachse (101') verläuft, ausgerichtet wird bis ein Toleranz-Winkel (a) dazwischen unterschritten wird durch gegen-synchrones Anlenken der Vorderräder (4a, b) und Hinterräder (4c, d) oder wahlweises Anlenken nur der Vorderräder (4a, b) oder der Hinterräder (4c, d)
oder
- mit seiner Längsmitte (10') fluchtend zur Mitten-Lotrechten (102') der Luken-Querachse ausgerichtet wird bis ein Toleranz-Abstand (A) dazwischen unterschritten wird durch synchrones Auslenken der Vorderräder (4a, b) und Hinterräder (4c, d).

15. Verfahren nach Anspruch 14,
**dadurch gekennzeichnet, dass**
während des Heranfahrens der Toleranz-Winkel (a) und/oder der Toleranz-Abstand (A), insbesondere automatisch, überprüft wird und die Räder und/oder der Hauptförderer (3) entsprechend gesteuert werden.

16. Verfahren nach einem der vorhergehenden Verfahrensansprüche,
**dadurch gekennzeichnet, dass**
bei einem vom Bediener vorgegebenen Verändern der Position des vorderen (3a) oder hinteren Endes (3b) des Hauptförderers (3) Ausgleichsbewegungen zum Halten der Position des anderen, hinteren oder vorderen, Endes (3a) des Hauptförderers (3) durchgeführt werden, insbesondere automatisch durchgeführt werden.

17. Verfahren nach Anspruch 16,
**dadurch gekennzeichnet, dass**
die Ausgleichsbewegungen darin bestehen, dass
- den Hauptförderer (3) abstützende, bewegliche Stützen (5, 6) zusammen mit dem Hauptförderer (3) synchron in Längsrichtung (10) relativ zum Chassis (2) verfahren werden,
und/oder
- eine vordere Stütze (5) der beweglichen Stützen (5, 6) in ihrer Länge verändert wird.
und/oder
- bei Vorhandensein einer Hubvorrichtung insbesondere in Form einer Hilfsstütze (7) an einer der beiden beweglichen Stützen (5, 6) auch die Hubvorrichtung zusammen mit den beiden beweglichen Stützen (5, 6) synchron in Längsrichtung (10) relativ zum Chassis (2) verfahren wird und/oder die eine der beiden beweglichen Stützen (5, 6) anhebt oder absenkt.

## Claims

1. Conveyor belt vehicle (1) with
- a chassis (2)
- which has four wheels (4a - d), of which at least two wheels (4a, b) can be steered,
- a main conveyor (3) liftably arranged on the chassis (2) and having a front end (3a) liftable higher than the rear end (3b)
- a front support (5) and a rear support (6), each of which is pivotally mounted at the main conveyor (3) on the one hand and on the chassis (2) on the other hand about a respective transversely extending pivot axis (5'a, 5'b, 6'a, 6'b),
**characterized in that**
- the lower transverse axes (5'a, 6'a) can be moved in a controlled manner in the longitudinal direction (10) along the chassis (2), so that the main conveyor (3) can be displaced in the longitudinal direction (10) relative to the chassis (2),
- a control system (1*) is provided which controls the movement of at least all movable parts of the conveyor belt vehicle (1).

2. Conveyor belt carriage according to claim 1,
**characterized in that**
- all four wheels (4a - d) are steerable in a controlled manner.

3. Conveyor belt vehicle according to claim 2,
**characterized in that**
- the chassis (2) is embodied in such a way that the front wheels (4a, b) can be steered independently of the rear wheels (4c, d),
- in particular the front wheels (4a, b) or the rear wheels (4c, d) can optionally be locked in the straight-forward position.

4. Conveyor belt vehicle according to claim 2 or 3,
**characterized in that**
- the chassis (2) is embodied in such a way that the steering of the wheels can be switched between synchronous and counter-synchronous steering of the front wheels (4a, b) and the rear wheels (4c, d),
- in particular, in both operating modes, the front wheels (4a, b) and the rear wheels (4c, d) can be operated with different present steering angles relative to the straight-forward direction (10).
(support structure)

5. Conveyor belt vehicle according to any one of the preceding claims,
**characterized in that**
the front support (5) and/or the rear support (6) are set back from the front or rear end (3a, b), respectively, of the main conveyor (3) and engage therewith.

6. Conveyor belt vehicle according to one of the preceding claims,
**characterized in that**
at least one of the supports (5, 6), in particular the front support (5), is adjustable in length, in particular telescopic.

7. Conveyor belt vehicle according to one of the preceding claims,
**characterized in that**
at least one of the supports (5, 6), apart from their pivot axes, engages an auxiliary support (7) for fixing the inclination of this support (5 or 6), in particular in the form of a lifting device for this support (5 or 6), in particular **in that** this support (5 or 6) is a hydraulic cylinder (9) or its lower pivot axis (7' b) can be moved in the longitudinal direction (10) with respect to the chassis (2).

8. Conveyor belt vehicle according to claim 7,
**characterized in that**
the lower pivot axes (5'a, 6'a, 7'a) of the front support (5) and/or of the rear support (6) and/or of the auxiliary support (7) are arranged on a common slide (18) or separate slide (18.1, 18.2) which can be moved in a controlled manner in the longitudinal direction (10).

9. Conveyor belt vehicle according to one of the claims 1 to 7,
**characterized in that**
- the lower pivot axes (5'a, 6'a) of the front support (5) and/or of the rear support (6) are arranged on a slide (18.1, 18.2),
- in particular on separate slide (18.1, 18.2).

10. Conveyor belt vehicle according to claim 7,
**characterized in that**
the lower pivot axis (7'a) of the auxiliary support (7)
- either is arranged on the same slide (18.2) which the support, which the auxiliary support (7) engages, engages with its upper pivot axis (7'b)
- or on its own auxiliary slide,
- which can be moved in particular on the slide (18.2) in the longitudinal direction (10), on which the lower pivot axis of that support (5, 6) is arranged which the auxiliary support (7) engages.

11. Conveyor belt vehicle according to one of the preceding claims,
**characterized in that**
at the front end (3a) of the main conveyor (3), on both sides, contact rollers (14) are movably arranged and protrude forwardly thereover, which are biased into their extended position over the front end (3a).

12. Conveyor belt vehicle according to one of the preceding claims,
**characterized in that**
a railing (16) arranged on both sides of the main conveyor (3) movably in the direction of its extension and projecting upward has a bumper (20) at the front end and is fastened to the main conveyor (3) by means of an abutment device (21), the abutment device (21) in particular comprising
- either a spring biasing the railing (16) in the direction to the front end (3a) of the main conveyor (3)
- or a traversing device, in particular a working cylinder (21), in particular a hydraulic cylinder (21) or a pneumatic cylinder (21), which moves the railing (16) in the extension direction of the main conveyor (3).

13. Method for operating a conveyor belt vehicle (1) according to one of the preceding claims, in that, when the conveyor belt vehicle (1) is approached with the front end (3a) to a desired position viewed in plan view, the conveyor belt vehicle (1),
- is approached by displacing the main conveyor (3) in the longitudinal direction (10) forward relative to the chassis (2).

14. Method according to claim 13,
**characterized in that**
the conveyor vehicle (1), in particular automatically,
- is aligned with the longitudinal center plane (10') of the main conveyor (3) approximately parallel to the center vertical (102'), which runs perpendicular to the hatch transverse axis (101'), until a tolerance angle (α) between them is undercut by counter-synchronous steering of the front wheels (4a, b) and rear wheels (4c, d) or optional steering of only the front wheels (4a, b) or the rear wheels (4c, d)
or
- is aligned with its longitudinal center plane (10') to the center vertical (102') of the hatch transverse axis until a tolerance distance (A) therebetween is undercutt by synchronous deflection of the front wheels (4a, b) and rear wheels (4c, d).

15. Method according to claim 14,
**characterized in that**
during approaching, the tolerance angle (α) and/or the tolerance distance (A) is checked, in particular automatically, and the wheels and/or the main conveyor (3) are controlled accordingly.

16. Method according to one of the preceding method claims,
**characterized in that**
when the position of the front (3a) or rear end (3b) of the main conveyor (3) is changed as specified by the operator, compensating movements for holding the position of the other, rear or front, end (3a) of the main conveyor (3) are carried out, in particular automatically.

17. Method according to claim 16,
**characterized in that**
compensating movements consist **in**
- **that** movable supports (5, 6) supporting the main conveyor (3) are moved together with the main conveyor (3) synchronously in the longitudinal direction (10) relative to the chassis (2),
and/or
- that a front support (5) of the movable supports (5, 6) is varied in length
and/or
- that, if a lifting device is present, in particular in the form of an auxiliary support (7) at one of the two movable supports (5, 6), the lifting device together with the two movable supports (5, 6) is also moved synchronously in the longitudinal direction (10) relative to the chassis (2) and/or one of the two movable supports (5, 6) is raised or lowered.

## Revendications

1. **Chariot de courroie transporteuse** (1) avec
- un châssis (2)
- qui comprend quatre roues (4a - d), dont au moins deux roues (4a, b) peuvent être dirigeables,
- un transporteur principal (3) disposé de manière à pouvoir être soulevé sur le châssis (2) et ayant une extrémité avant (3a) pouvant être soulevée plus haut que l'extrémité arrière (3b)
- un support avant (5) et un support arrière (6), dont chacun est fixé au transporteur principal (3) d'une part et au châssis (2) d'autre part de manière à pouvoir pivoter autour d'un axe de pivotement respectif s'étendant transversalement (5'a, 5'b, 6'a, 6'b),
**caractérisé en ce que**
- les axes transversaux inférieurs (5'a, 6'a) peuvent être déplacés de manière contrôlée dans la direction longitudinale (10) le long du châssis (2), de sorte que le transporteur principal (3) peut être déplacé dans la direction longitudinale (10) par rapport au châssis (2),
- un système de commande (1*) est prévu qui commande le mouvement d'au moins toutes les parties mobiles du chariot de courroie transporteuse (1).

2. Chariot de courroie transporteuse selon la revendication 1,
**caractérisé en ce que**
- les quatre roues (4a - d) sont dirigeables de manière contrôlée.

3. Chariot de courroie transporteuse selon la revendication 2,
**caractérisé en ce que**
- le châssis (2) est conçu de manière à ce que les roues avant (4a, b) puissent être dirigées indépendamment des roues arrière (4c, d),
- en particulier, soit les roues avant (4a, b), soit les roues arrière (4c, d) peuvent être bloquées en position droite.

4. Chariot de courroie transporteuse selon la revendication 2 ou 3,
**caractérisé en ce que**
- le châssis (2) est conçu de telle sorte que la direction des roues peut être commutée entre une direction synchrone et une direction contre-synchrone des roues avant (4a, b) et des roues arrière (4c, d),
- en particulier, dans les deux modes de fonctionnement, les roues avant (4a, b) et les roues arrière (4c, d) peuvent être actionnées avec des angles de direction instantanés différents par rapport à la direction longitudinale (10).
(construction de support)

5. Chariot de courroie transporteuse selon l'une des revendications précédentes,
**caractérisé en ce que**
le support avant (5) et/ou le support arrière (6) sont en retrait de l'extrémité avant ou arrière (3a, b), respectivement, du transporteur principal (3) et s'engagent avec celui-ci.

6. Chariot de courroie transporteuse selon l'une des revendications précédentes, **caractérisé en ce qu'**au moins un des supports (5, 6), notamment le support avant (5), est réglable en longueur, notamment télescopique.

7. Chariot de courroie transporteuse selon l'une des revendications précédentes,
**caractérisé en ce que**
un support auxiliaire (7) agit sur au moins l'un des supports (5, 6) en dehors de leurs axes de pivotement pour fixer l'inclinaison de ce support (5 ou 6), notamment sous la forme d'un dispositif de levage de ce support (5 ou 6), notamment **en ce que** ce support (5 ou 6) est un vérin hydraulique (9) ou son axe de pivotement inférieur (7' b) est mobile dans la direction longitudinale (10) par rapport au châssis (2).

8. Chariot de courroie transporteuse selon la revendication 7,
**caractérisé en ce que**
les axes de pivotement inférieurs (5'a, 6'a, 7'a) du support avant (5) et/ou du support arrière (6) et/ou du support auxiliaire (7) sont disposés sur un chariot commun (18) ou des chariots séparés (18.1, 18.2) qui peuvent être déplacés de manière contrôlée dans la direction longitudinale (10).

9. Chariot de courroie transporteuse selon l'une des revendications 1 à 7,
**caractérisé en ce que**
- les axes de pivotement inférieurs (5'a, 6'a) du support avant (5) et/ou du support arrière (6) sont disposés sur un chariot,
- en particulier sur les wagons séparés (18.1, 18.2).

10. Chariot de courroie transporteuse selon la revendication 7,
**caractérisé en ce que**
l'axe de pivotement inférieur (7'a) du support auxiliaire (7)
- soit est disposé sur le même chariot (18.2) que le support sur lequel s'engage le support auxiliaire (7) avec son axe de pivotement supérieur (7'b)
- ou sur son propre chariot auxiliaire
- qui peut être déplacé dans la direction longitudinale (10), en particulier sur le chariot (18.2), sur lequel est disposé l'axe de pivotement inférieur de ce support (5, 6) sur lequel s'engage le support auxiliaire (7).

11. Chariot de courroie transporteuse selon l'une des revendications précédentes,
**caractérisé en ce que**
des rouleaux de contact (14) sont disposés de manière mobile à l'extrémité avant (3a) du transporteur principal (3), des deux côtés, et font saillie vers l'avant au-dessus de celui-ci, lesquels rouleaux de contact sont sollicités dans leur position étendue au-dessus de l'extrémité avant (3a).

12. Chariot de courroie transporteuse selon l'une des revendications précédentes,
**caractérisé en ce que**
une rambarde (16) disposée de manière mobile des deux côtés du transporteur principal (3) dans le sens de son parcours et faisant saillie vers le haut présente un pare-chocs (20) à l'extrémité avant et est fixée au transporteur principal (3) au moyen d'un dispositif de butée (21), le dispositif de butée (21) étant notamment
- soit un ressort sollicitant la rambarde (16) en direction de l'extrémité avant (3a) du transporteur principal (3)
- ou un dispositif de déplacement, en particulier un cylindre de travail (21), en particulier un cylindre hydraulique (21) ou un cylindre pneumatique (21), qui déplace le garde-corps (16) dans le sens de marche du transporteur principal (3).

13. **Procédé de fonctionnement** d'un chariot de courroie transporteuse (1) selon l'une des revendications précédentes, en ce que, lorsque le chariot de courroie transporteuse (1) est approché par son extrémité avant (3a) d'une position souhaitée vue en plan, le chariot de courroie transporteuse (1),
- est abordée en déplaçant le transporteur principal (3) dans la direction longitudinale (10) vers l'avant par rapport au châssis (2).

14. Procédé selon la revendication 13,
**caractérisé en ce que**
le chariot de courroie transporteuse (1), en particulier automatiquement,
- est aligné avec le plan médian longitudinal (10') du transporteur principal (3) approximativement parallèlement à la verticale centrale (102'), qui s'étend perpendiculairement à l'axe transversal de trappe (101'), jusqu'à ce qu'un angle de tolérance (a) entre eux soit sous-dépassé par un braquage contre-synchrone des roues avant (4a, b) et des roues arrière (4c, d) ou un braquage optionnel de seulement les roues avant (4a, b) ou les roues arrière (4c, d)
ou
- est aligné avec son centre longitudinal (10') aligné avec la verticale centrale (102') de l'axe transversal de trappe jusqu'à ce qu'une distance de tolérance (A) entre eux ne soit pas atteinte par une déflexion synchrone des roues avant (4a, b) et des roues arrière (4c, d).

15. Procédé selon la revendication 14,
**caractérisé en ce que**
pendant l'approche, l'angle de tolérance (a) et/ou la distance de tolérance (A) est vérifié, en particulier automatiquement, et les roues et/ou le transporteur principal (3) sont commandés en conséquence.

16. Procédé selon l'une des revendications de procédé précédentes,
**caractérisé en ce que,**
lorsque la position de l'extrémité avant (3a) ou arrière (3b) du transporteur principal (3) est modifiée d'une manière prédéterminée par l'opérateur, des mouvements de compensation pour maintenir la position de l'autre extrémité, arrière ou avant (3a), du transporteur principal (3) sont exécutés, en particulier automatiquement.

17. Procédé selon la revendication 16,
**caractérisé en ce que**
les mouvements de compensation consistent
- à déplacer des supports mobiles (5, 6) supportant le transporteur principal (3) avec le transporteur principal (3) de manière synchrone dans la direction longitudinale (10) par rapport au châssis (2),
et/ou
- un support avant (5) des supports mobiles (5, 6) est modifié dans sa longueur et/ou
- si un dispositif de levage est présent, en particulier sous la forme d'un support auxiliaire (7) sur l'un des deux supports mobiles (5, 6), le dispositif de levage ainsi que les deux supports mobiles (5, 6) sont également déplacés de manière synchrone dans la direction longitudinale (10) par rapport au châssis (2) et/ou l'un des deux supports mobiles (5, 6) est levé ou abaissé.
